# EUROPEAN PATENT APPLICATION

(11) **EP 3 209 024 A1**
(43) Date of publication of application: **23.08.2017**
(21) Application number: 16202648.8
(22) Date of filing: 07.12.2016
(51) Int. Cl.: H04N 21/41, G06F 3/0488, H04N 21/422

(54) **REMOTE CONTROLLER FOR PROVIDING A FORCE INPUT IN A MEDIA SYSTEM AND METHOD FOR OPERATING THE SAME**

(30) Priority: 17.02.2016 KR 20160018621
(71) Applicant: Humax Co., Ltd., Gyeonggi-do, 17040 (KR)
(72) Inventor: PARK, Sung Heum, 16975 Yongin-si, Gyeonggi-do (KR)
(74) Representative: Zardi, Marco

(57) **Abstract**

A remote controller for providing a force input in a media system and a method for operating the same are disclosed. The remote controller comprises: at least one of a navigation key, a determination key or a function key, a first sensing unit configured to sense a coordinate of the key, a second sensing unit configured to sense one or more of pressure and an area applied to the key by a means for selecting the key, and a control signal unit. Here, one or more sensing levels are set to the key. The sensing level is determined according to at least one of the pressure or the area, an area for the second sensing unit is less than an area for the first sensing unit, the control signal unit outputs a control signal including a control information concerning the determined sensing level, the control information includes the coordinate of the selected key and information concerning the pressure or the area applied when the key is selected, and plural sensing levels from the same key are matched with different function or screen.

## Description

### BACKGROUND

### 1. Field of the Invention

The present disclosure relates generally to a remote controller for providing a force input in a media system and a method for operating the same.

### 2. Description of the Related Art

A set-top box is connected to a television, converts properly a video signal and a voice signal received from an external device and displays an image corresponding to the converted video and voice signal through the television.

The set-top box receives an IPTV signal, a cable TV signal, a satellite TV signal or a general signal for broadcasting, and the set-top box displays the received signal on the television.

The set-top box generally interoperates with a wired or wireless controller. A user remotely controls the set-top box with the remote controller.

Functions of the set-top box or the television are diversified as types of contents and services provided from an IPTV, a cable TV or a satellite TV have been diversified. The number of buttons in the remote controller controlling the set-top box or the television has increased due to the diversification of the functions.

It is preferable to provide various contents and services to the user, but the user need to know a function of each button in the remote controller in order to fully enjoy the various contents and services provided.

It becomes difficult for the user to control the remote controller with keeping the user's eyes toward the television (blind control) as the remote controller has lots of buttons. Additionally, there are many factors distracting user's view when the user controls the remote controller. For example, the user should look at the remote controller and select a relevant button whenever the user wants to properly control the remote controller.

A demand for a remote controller having few or no button has been on the rise. Since a conventional remote controller does not satisfy such demand, a system and method for controlling the remote controller minimizing the number of the buttons in the remote controller is needed while allowing the user to enjoy a variety of contents and services. With the remote controller having few or no button, the user may easily figure out how to use the remote controller and it also enables the user to perform the blind control when using the remote controller.

### SUMMARY

The invention has been made to address at least the disadvantages and problems described above, and to provide at least the advantage described below. An aspect of the invention provides a remote controller and a method for operating the same to control various functions of an image processing terminal with minimal number of buttons or keys.

According to one embodiment of the invention, a remote controller comprises at least one of a navigation key, a determination key or a function key; a first sensing unit configured to sense a coordinate of the key; a second sensing unit configured to sense one or more of pressure and an area applied to the key by a means for selecting the key; and a control signal unit. Here, one or more sensing levels are set to the key. The sensing level is determined according to at least one of the pressure or the area, an area for the second sensing unit is less than an area for the first sensing unit, the control signal unit outputs a control signal including a control information concerning the determined sensing level, the control information includes the coordinate of the selected key and information concerning the pressure or the area applied when the key is selected, and plural sensing levels from the same key are matched with different function or screen.

According to another embodiment of the invention, a remote controller comprises at least one of a navigation key, a determination key or a function key; a sensing unit configured to sense a selection of the key; a control signal unit. Here, an input for selecting the key includes a normal input and a force input with higher pressure or a wider area than those of the normal input. The normal input is related to a first function or a first screen corresponding to a general function of the key shown externally, the force input is related to a second function or a second screen not shown externally, and the second function and the second screen are different from the first function and the first screen, respectively.

According to still another embodiment of the invention, a remote controller comprises a navigation key; a function key; a determination key; and a sensing unit configured to sense a selection of the navigation key, the function key or the determination key. Here, a normal input and a force input are set to at least one of the navigation key, the function key or the determination key, the force input being applied to a corresponding key with higher pressure or a wide area than those of the normal input. The navigation key operates as the function key or the determination key when the force input is applied to the navigation key, the function key operates as the navigation key or the determination key when the force input is applied to the function key, or the determination key operates as the navigation key or the function key when the force input is applied to the determination key.

According to still another embodiment of the invention, a remote controller comprises at least one of a navigation key, a determination key or a function key; a sensing unit configured to sense a selection of the key; and a control signal unit. Here, a plurality of sensing levels are set to the key. The sensing level is determined according to one or more of a pressure and an area applied to the key by a means for selecting the key, the control signal unit outputs a control signal including a control information concerning the determined sensing level, the control information includes a coordinate of the selected key and an information concerning the pressure or the area applied when the key is selected, sensing levels from the same key are matched with different function or screen of an image processing terminal connected to the remote controller, and a function or a screen of the image processing terminal varies according to a software of the image processing terminal in the same sensing level from the same key of the remote controller.

According to one embodiment of the invention, a method for operating a remote controller comprises sensing a selection of a specific key in the remote controller with a normal input; outputting a first control signal corresponding to the normal input; sensing a force input being applied to the specific key with higher pressure or a wider area than those of the normal input; and outputting a second control signal corresponding to the force input. Here, the normal input and the force input from the same key are matched with different function or screen, and an area of a sensing unit for sensing the force input of the remote controller is less than an area of a sensing unit for sensing a coordinate of the key of the remote controller.

A remote controller of the invention applies a force input as well as a normal input. The inputs are matched with various functions of an image processing terminal such as a set-top box and a television, etc. As a result, a user may control various functions of the image processing terminal though the remote controller is implemented with minimal number of keys.

In an upgrade of a media system, a software of the image processing terminal is upgraded but a software of the remote controller is not upgraded. Thus, the structure of the remote controller may be simple and the manufacture cost of the remote controller may reduce.

### BRIEF DESCRIPTION OF DRAWINGS

The aspects, features, advantages and embodiments of the invention will be more apparent from the following detailed description taken in conjunction with reference to the accompanying drawings, in which:
FIG. 1 is a view illustrating a media system according to one embodiment of the invention;
FIG. 2 is a view illustrating schematically a remote controller according to one embodiment of the invention;
FIG. 3 is a view illustrating a control operation of the remote controller according to one embodiment of the invention;
FIG. 4 is a view illustrating a touch of the touch means according to one embodiment of the invention;
FIG. 5 is a flow chart illustrating schematically an operation of a media system according to one embodiment of the invention;
FIG. 6 to FIG. 10 are views illustrating examples related to the operation in FIG. 5;
FIG. 11 is a flowchart illustrating schematically an operation of the media system according to another embodiment of the invention;
FIG. 12 is a view illustrating an example related to the operation in FIG. 11;
FIG. 13 is a view illustrating an operation of the media system according to still another embodiment of the invention;
FIG. 14 is a view illustrating schematically a structure of the remote controller according to a first embodiment of the invention;
FIG. 15 is a view illustrating schematically a structure of the remote controller according to a second embodiment of the invention;
FIG. 16 is a view illustrating schematically a structure of the remote controller according to a third embodiment of the invention;
FIG. 17 is a view illustrating an operation of the media system according to another embodiment of the invention;
FIG. 18 is a view illustrating schematically a structure of the remote controller according to a fourth embodiment of the invention;
FIG. 19 is a view illustrating schematically a structure of the remote controller according to a fifth embodiment of the invention;
FIG. 20 is a view illustrating an upgrade operation of the media system according to one embodiment of the invention;
FIG. 21 is a view illustrating an image processing terminal according to one embodiment of the invention;
FIG. 22 is a block diagram illustrating a remote controller according to one embodiment of the invention;
FIG. 23 is a view illustrating a structure of the remote controller according to one embodiment of the invention; and
FIG. 24 is a view illustrating a structure of the remote controller according to another embodiment of the invention.

### DETAILED DESCRIPTION

In the present specification, an expression used in the singular encompasses the expression of the plural unless it has a clearly different meaning in the context. In the present specification, terms such as "comprising" or "including," etc., should not be interpreted as meaning that all of the elements or operations are necessarily included. That is, some of the elements or operations may not be included, while other additional elements or operations may be further included. Also, terms such as "unit," "module," etc., as used in the present specification may refer to a part for processing at least one function or action and may be implemented as hardware, software, or a combination of hardware and software.

The invention relates to a media system including an image processing terminal and a remote controller for controlling the same. Here, the image processing terminal may be a display device, including a television, for displaying an image or a set-top box for transmitting an image signal to the display device. That is, the image processing terminal is not limited as specific device as long as it is a device related to processing of the image. For example, the image processing terminal may be the set-top box or the television having functions of the set-top box.

The remote controller of the invention includes at least one key, and provides a control signal including information about a sensing level of a key selected by a user to the image processing terminal. In this case, the image processing terminal may process different functions or screens according to the sensing level of the key. Here, the key may be implemented with a physical button including a dome key or by software.

Hereinafter, various embodiments of the invention will be described in detail with reference to accompanying drawings.

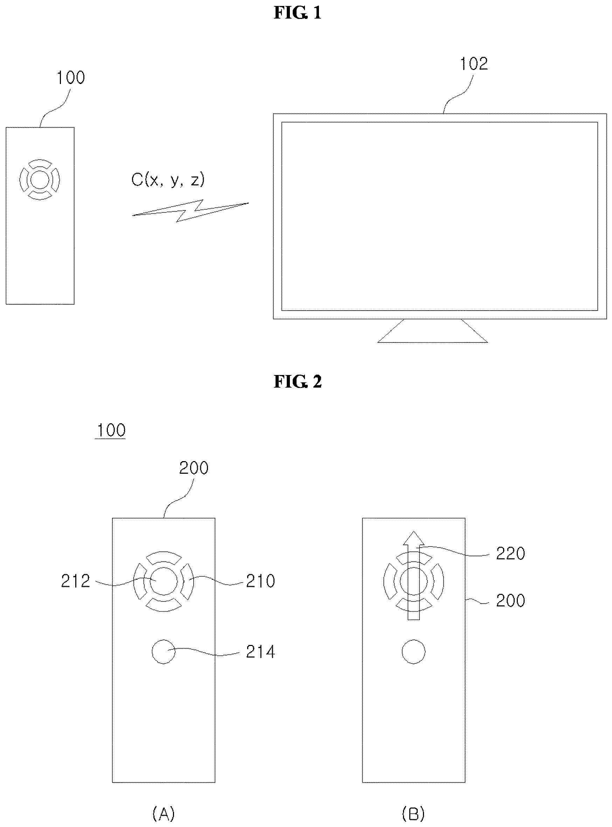

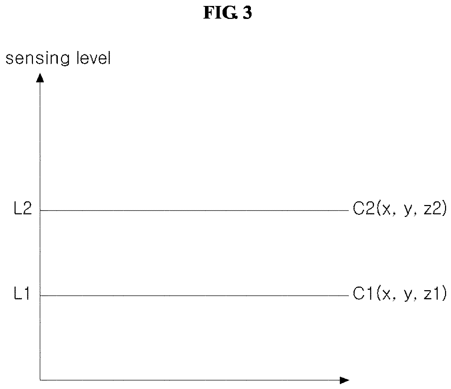

FIG. 1 is a view illustrating a media system according to one embodiment of the invention, FIG. 2 is a view illustrating schematically a remote controller according to one embodiment of the invention, and FIG. 3 is a view illustrating a control operation of the remote controller according to one embodiment of the invention. On the other hand, FIG. 2 shows the remote controller having keys implemented by software.

In FIG. 1, the media system of the invention includes a remote controller 100 and an image processing terminal 102.

In one embodiment, as shown (A) in FIG. 2, the remote controller 100 may comprise a body 200, a navigation key 210 including up, down, left, or right directional keys, a function key 214 for performing a variety of operations such as an esc key and a home key, etc., and a determination key 212 for performing an operation of an OK key. On the other hand, various keys other than the navigation key 210, the determination key 212 and the function key 214 may exist in the remote controller 100. The various keys may be classified as the navigation key 210, the determination key 212 and the function key 214.

The remote controller 100 may be connected to the image processing terminal 102 via wireless or wired communication, and control the operation of the image processing terminal 102. For example, the remote controller 100 may control a program guide displayed on the image processing terminal 102.

In one embodiment, functions related to two or more operations of the image processing terminal 102 may be set to at least one of the keys in the remote controller 100. Particularly, the remote controller 100 may transmit a control signal for performing a different operation according to pressure or an area applied to the key by a touch means to the image processing terminal 102. The touch means may include a finger and any input device. Here, a sensing level of the remote controller 100 differs depending on the pressure or the area, and thus the remote controller 100 may transmit different control signals to the image processing terminal 102 according to the sensing level of the key.

An input to the remote controller 100 by the touch means may include a normal input and a force input. The normal input means a general input pressed or touched by a user. In this case, a general operation set to the key of the remote controller 100 is performed as similarly as an operation of the key in a conventional remote controller. For example, an up operation is performed when an up key is pressed or touched. The force input means an input of the key when the key is pressed or touched with higher pressure or a wider area than those of the normal input. In this case, an operation or a screen of the image processing terminal 102 is different from that of the image processing terminal 102 in the normal input. On the other hand, though a long press is applied under the normal input, the long press may not be regarded as the force input but be recognized as the normal input. Various embodiments related to the above description will be described below.

In another embodiment, if the key of the remote controller 100 selected by the touch means has a coordinate (x, y), information concerning the sensing level may be expressed in a z axis. That is, both the coordinate of the selected key and the sensing level may be expressed in a three-dimensional coordinate (x, y, z). However, other methods may be used to express the coordinate and the sensing level of the selected key. For example, four or more dimensional coordinate may be used.

Accordingly, in the event that the user selects a specific key with a specific sensing level, the remote controller 100 may transmit the control signal including the coordinate (x, y) corresponding to the specific key and a coordinate (z) related to the sensing level to the image processing terminal 102. That is, the remote controller 100 may transmit the control signal C(x, y, z) to the image processing terminal 102.

For example, in the event that the user selects the navigation key 210 corresponding to a right directional key with a first sensing level (normal input), the remote controller 100 may transmit a control signal C1 having a coordinate (x, y, z1) to the image processing terminal 102. In the event that the user presses or touches the navigation key 210 with higher pressure, for example, selecting the navigation key 210 with a second level (force input), the remote controller 100 may transmit a control signal C2 having a coordinate (x, y, z2) to the image processing terminal 100.

Here, the image processing terminal 102 may perform a different operation according to the control signal. For example, the image processing terminal 102 may perform an operation of displaying a program guide according to the first control signal C1, and perform an operation of displaying a list of recommendation programs according to the second control signal C2. That is, the image processing terminal 102 may perform a different operation according to the sensing level corresponding to the pressure or the area applied to the key of the remote controller 100 by the user. The image processing terminal 102 displays the program guide on a screen if it is the television. The image processing terminal 102 transmits an image signal related to the program guide to the television if it is the set-top box.

On the other hand, the remote controller 100 may transmit a control signal including a direct command for operating a specific function, but it may transmit preferably a control signal including the coordinate(x, y, z) to the image processing terminal 102. In this case, an operation corresponding to the coordinate(x, y, z) may be determined by the image processing terminal 102. Accordingly, the image processing terminal 102 may perform a different operation according to a software installed therein though the remote controller 100 transmits the same coordinate to the image processing terminal 102.

The force input may be classified to force up and force down.

In one embodiment, the force up may be set when the force input is applied to an up directional key as the navigation key 210, and the force down may be set when the force input is applied to a down directional key as the navigation key 210. For example, in a home screen, a recommendation program may be displayed on the image processing terminal 102 when the force input is applied to the up directional key, and a Video on Demand (VOD) list may be displayed on the image processing terminal 102 when the force input is applied to the down directional key. In this case, the recommendation program may be displayed when the force input is applied to the up directional key in the home screen, the screen displaying the recommendation program is returned to the home screen when the force input is applied to the down directional key, and then the VOD list may be displayed when the force input is applied to the down directional key in the home screen.

In another embodiment, a different function may be performed depending on different sensing levels applied to the same key. For example, the force up may be set when the sensing level reaches a second sensing level applied to a key, and the force down may be set when the sensing level reaches a third sensing level applied to the same key. In addition, a recommendation program may be displayed when the sensing level reaches the second sensing level by applying the force input to a determination key 212, and a VOD list may be displayed when the sensing level reaches the third sensing level by applying the force input to the determination key 212. In this case, the recommendation program may be displayed when the sensing level reaches the second sensing level by applying the force input to the specific determination key 212 under a home screen, a screen displaying the recommendation program may be returned to the home screen when the sensing level reaches the third sensing level by applying the force input to the determination key 212, the VOD list may be displayed when the sensing level keeps the third sensing level by applying the force input to the determination key 212 in the home screen, and then a screen displaying the VOD list may be returned to the home screen when the sensing level reaches the second sensing level by applying the force input to the determination key 212.

The remote controller 100 may determine the sensing level by sensing a touch area or touch pressure by the touch means and transmit the control signal including information concerning the determined sensing level to the image processing terminal 102. The image processing terminal 102 may perform different operations according to the sensing level.

The sensing level applied to the key can be determined when the touch with corresponding pressure or area is continuously maintained for predetermined time or more.

In the event that a sensing level corresponding to the touch by the touch means is not matched with preset sensing level and locates between specific sensing levels, the sensing level may be determined to one of the specific sensing levels. Particularly, the sensing level may be determined to a higher level or a lower level of the specific levels.

Additionally, the media system may consider a gesture as well as the force input. Here, the gesture 220 includes an act of touching a key with predetermined length or more as shown in (B) in FIG. 2, and a specific operation may be performed in response to the gesture. For example, in the event that an image of specific entity in a program guide is displayed as a picture in picture (PIP) according to the force input, the PIP may shift in a preset direction, be magnified to a full screen, or be returned to a location before the force input is applied in response to the gesture. The gesture 220 may include the touch of plural keys.

On the other hand, the coordinate is expressed in three dimensional coordinate (x, y, z) in above description. However, if the area and the pressure are individually expressed, the coordinate may be expressed in four dimensional coordinate (x, y, z, t). That is, the coordinate may include at least one parameter related to the sensing level.

In a conventional remote controller, only the normal input of the key exists and only one function may be matched with one key. As a result, the remote controller should have many keys and a complicated structure; thereby causing user's inconvenience.

However, since the remote controller 100 of the invention applies the force input as well as the normal input, plural functions may be matched with one key. Accordingly, the remote controller 100 controls the image processing terminal 102 to perform various functions with few or no key. Thus, the remote controller 100 may have a simple structure and enhance user's convenience in its usage.

Hereinafter, the operation of the media system will be described in detail in various views.

In a first view, the image processing terminal 102 may perform a different function according to the sensing level in the event that the user selects a specific key of the remote controller 100 with a different sensing level. Furthermore, the navigation key like the up key may function as the function key or the determination key according to the force input. For example, in the event that the force input is applied to the navigation key, the navigation key with the force input may function as a home key or an esc key. Of course, the function key with the force input may operate as the navigation key or the determination key, and the determination key with the force input may operate as the navigation key or the function key.

In a second view, the image processing terminal 102 may display a different screen when the user selects a specific key of the remote controller 100 with different sensing level. That is, the image processing terminal 102 may display a first screen showing a first user interface (UI) as the entity when the remote controller 100 transmits a first control signal corresponding to a first sensing level to the image processing terminal 102, and display a second screen showing a second user interface (UI) when the remote controller 100 transmits a second signal corresponding to a second sensing level to the image processing terminal 102.

In a third view, the image processing terminal 102 may perform a different operation in the same function according to the sensing level in the event that the user selects a specific key of the remote controller 100 with a different sensing level. For example, the image processing terminal 102 may shift a cursor on a program guide with a first velocity while the program guide is being displayed when the remote controller 100 transmits a first control signal corresponding to a first sensing level to the image processing terminal. The image processing terminal 102 may shift the cursor on the program guide with a second velocity which is different from the first velocity when the remote controller 100 transmits a second control signal corresponding to a second sensing level to the image processing terminal 102. Other examples will be described below.

In a fourth view, the image processing terminal 102 may implement a different entity according to the sensing level in the event that the user selects a specific key with a different sensing level. For example, the image processing terminal 102 may display an entity related to the program guide when the remote controller 100 transmits a first control signal corresponding to a first sensing level to the image processing terminal 102, and display an entity related to a user's favorite program when the remote controller 100 transmits a second control signal corresponding to a second sensing level to the image processing terminal 102.

In a fifth view, a function or an operation performed by the image processing terminal 102 may differ though the same force input is applied to the same key of the remote controller 100 according to a mode or a program set to the image processing terminal 102.

For example, an arrangement of program lists may be changed in the event that the force input is applied to the determination key 212 while the image processing terminal 102 is displaying the program lists, but recommended VOD lists suitable for the user may be displayed in the event that the force input is applied to the determination key 212 while the image processing terminal 212 is displaying VOD lists provided by a provider.

Hereinafter, various embodiments related to operations in accordance with the sensing level of the invention will be described in detail.

Firstly, the sensing level will be defined.

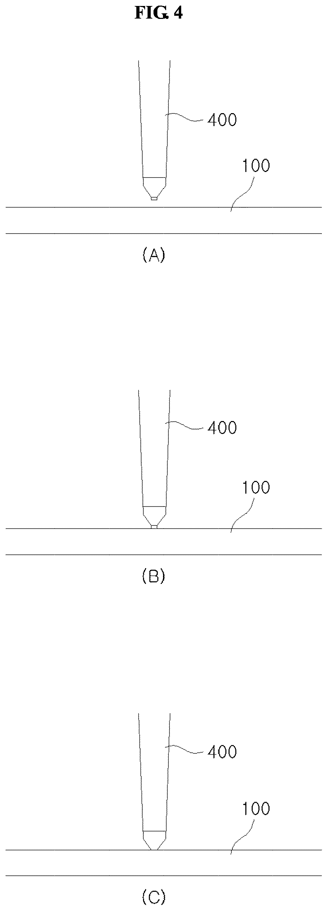

FIG. 4 is a view illustrating touch of the touch means according to one embodiment of the invention.

One or more sensing levels may be set to a key of the remote controller 100. For example, a first level for sensing proximity of a touch means 400 is shown in (A) in FIG. 4. A second level for sensing the touch means 400 touching with a level less than a preset sensing level (normal input) as shown in (B) in FIG. 4. A third level for sensing the touch means 400 touching with a level more than the preset sensing level (force input) as shown in (C) in FIG. 4. The one or more sensing levels includes the first level, the second level and the third level.

That is, a sensing level may be set to an individual key of the remote controller 100. Plural sensing levels may be set to a specific key or every key in the remote controller. One sensing level may be set to the key. Here, the sensing level may be determined through a change of capacitance.

On the other hand, the sensing level may be determined when the user touches continuously the remote controller 100 or the key thereof during predetermined time or more.

Next, embodiments related to various operations will be described in detail.

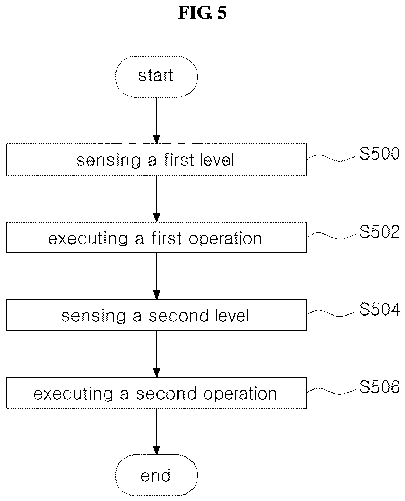

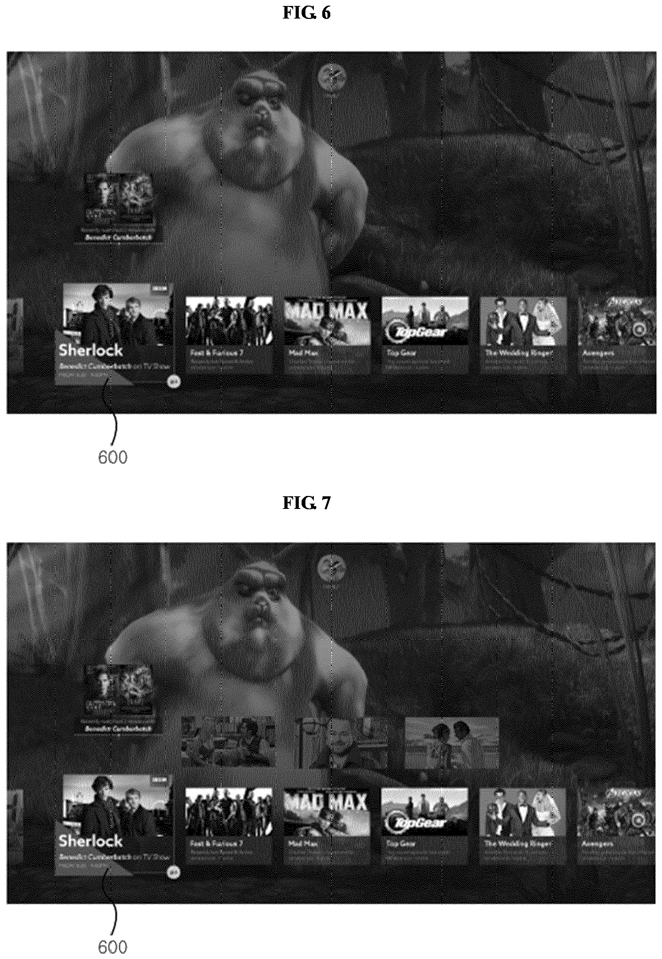

FIG. 5 is a flow chart illustrating schematically an operation of a media system according to one embodiment of the invention, and FIG. 6 to FIG. 10 are views illustrating examples related to the operation in FIG. 5.

In FIG. 5, in a step of S500, the remote controller 100 senses a first sensing level according to touch by the touch means. In one embodiment, the remote controller 100 may sense the sensing level via a sensor including a capacitive method. The sensing level may be determined by at least one of the area or the pressure applied to specific key.

Subsequently, the remote controller 100 determines information concerning the first sensing level in accordance with the selection of the specific key as a coordinate (x, y, z1), and transmits a first control signal including the coordinate (x, y, z1) to the image processing terminal 102. In this case, the image processing terminal 102 may execute a first operation in response to the first control signal in a step of S502.

In a step of S504, the user touches the specific key with higher pressure or a wider area by using the touch means, and the remote controller 102 senses a second sensing level in accordance with the touch by the touch means.

In a step of S506, the remote controller 100 determines information concerning the second sensing level as a coordinate (x, y, z2) in accordance with the selection of the specific key and transmits a second control signal including the coordinate (x, y, z2) to the image processing terminal 102. In this case, the image processing terminal 102 may execute a second operation according to the second control signal in a step of S506.

For example, in a first embodiment related to the above operation, the image processing terminal 102 may display a screen showing a channel list or program guide including at least one channel entity 600 as shown in FIG. 6, in the event that the remote controller 100 transmits the first control signal including the information concerning the first sensing level to the image processing terminal 102.

Subsequently, the image processing terminal 102 may display a screen showing more channel entities 600 as shown in FIG. 7, in the event that the remote controller 100 transmits the second control signal including the information concerning the second sensing level to the image processing terminal 102.

That is, the image processing terminal 102 may increase or decrease the number of the entity according to the sensing level of the remote controller 100.

The method of the invention is described with the channel list in above description, but the above operation may be applied to various entities such as a VOD list, a favorite program list, etc.

In a second embodiment, the image processing terminal 102 may display a screen on which channel entities 600 are shown in a first arrangement manner as shown in FIG. 7 in the event that the remote controller 100 transmits the first control signal including the information concerning the first sensing level to the image processing terminal 102.

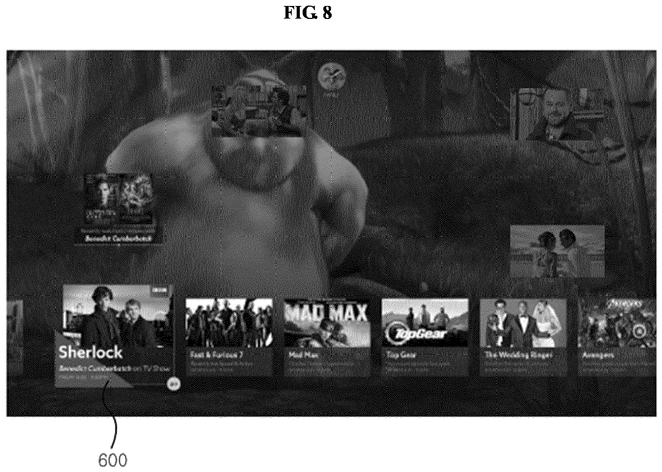

Then, the image processing terminal 102 may display a screen on which the channel entities 600 are shown in a second arrangement manner which is different from the first arrangement as shown in FIG. 8 in the event that the remote controller 100 transmits the second control signal including the information concerning the second sensing level to the image processing terminal 102.

Here, the change of the arrangement may include a case that location of the entity 600 is changed, a case that the entity 600 is added or deleted, and a case that size of the entity is changed, etc.

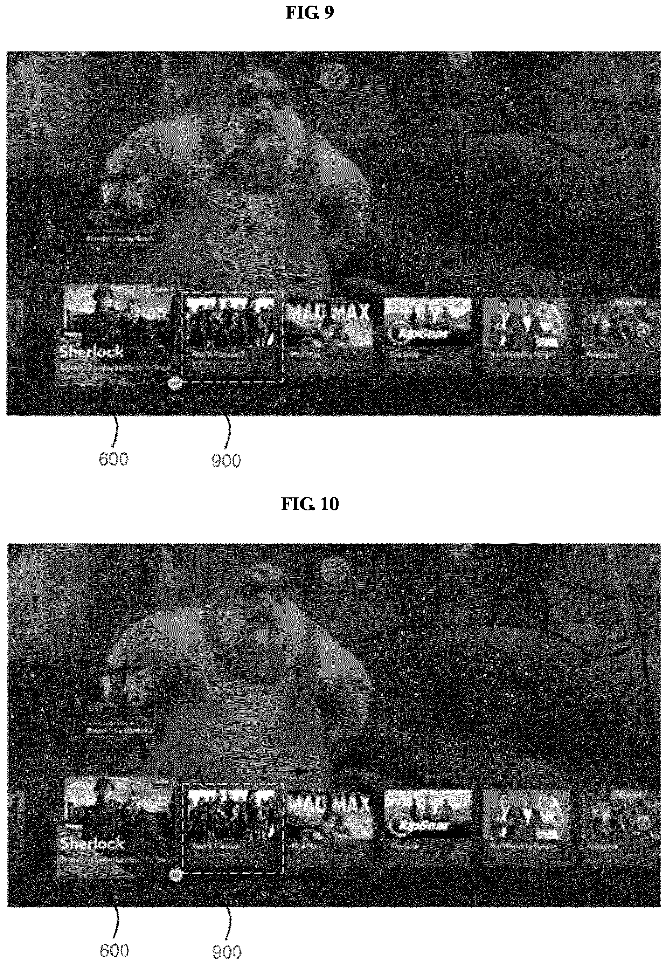

In a third embodiment, when the remote controller 100 transmits the first control signal including the information concerning the first sensing level corresponding to a right directional key to the image processing terminal 102, the image processing terminal 102 may display the entities 600 and shift a selected entity 900 with a first velocity (v1) in a right direction while locating the selected entity 900 on one of the entities 600 as shown in FIG. 9.

Subsequently, the image processing terminal 102 may shift the selected entity 900 with a second velocity (v2) in the right direction as shown in FIG. 10 when the remote controller 100 transmits the second control signal including the information concerning the second sensing level corresponding to the right directional key to the image processing terminal 102. In another embodiment, the image processing terminal 102 may shift the selected entity 900 via a jumping method including a method skipping one or more predetermined sections of the contents and services.

That is, the shift velocity of the entity 900 may differ according to the sensing level.

On the other hand, a playing velocity of a VOD, not the shift velocity, may differ according to the sensing level. Change of the shift velocity and the playing velocity may correspond to the navigation key 210 related to the directional key.

Referring synthetically to FIG. 5 to FIG. 10, the function or the operation of the image processing terminal 102 may differ according to the change of the sensing level of the specific key in the remote controller 100.

Change of the size of the entity or a shape, contents preview, change to the home screen, or change of a mode may be executed according to the sensing level.

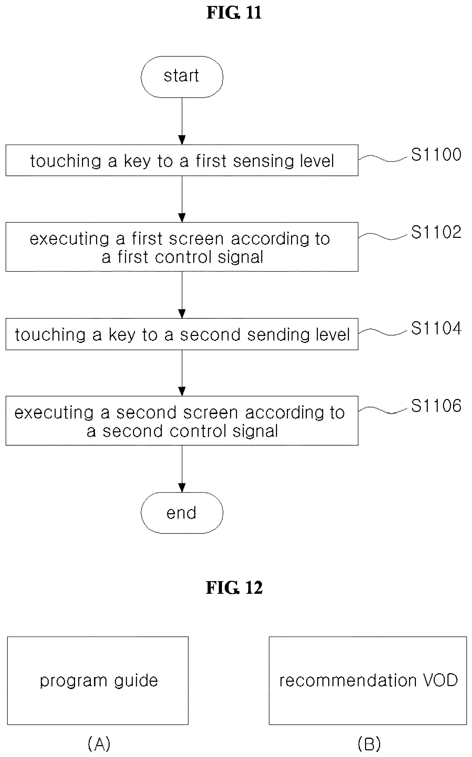

FIG. 11 is a flowchart illustrating schematically an operation of the media system according to another embodiment of the invention, and FIG. 12 is a view illustrating an example related to the operation shown in FIG. 11.

In FIG. 11, the remote controller 100 senses a first sensing level according to touch by the touch means in a step of S1100.

Subsequently, the remote controller 100 determines information concerning the first sensing level according to a selection of a specific key as three dimensional coordinate (x, y, z1) and transmits a first control signal including the coordinate (x, y, z1) to the image processing terminal 102. In this case, the image processing terminal 102 may execute a first screen according to the first control signal in a step of S1102.

In a step of S1104, the user may touch the specific key with higher pressure or a wider area by using the touch means, and the remote controller 102 sense a second sensing level according to the touch by the touch means.

Then, the remote controller 100 determines information concerning the second sensing level according to the selection of the specific key as a coordinate (x, y, z2) and transmits a second control signal including the coordinate (x, y, z2) to the image processing terminal 102. In this case, the image processing terminal 102 may execute a second screen according to the second control signal in a step of S 1106.

In short, the media system of the present embodiment may implement a different screen on the image processing terminal 102 in response to the change of the sensing level of the remote controller 100.

In another embodiment, the media system may change an application processed in the image processing terminal 102 according to the change of the sensing level of the remote controller 100.

Referring to an embodiment related to the above operation, the image processing terminal 102 may display a first screen showing a program guide as shown in (A) in FIG. 12 in the event that the remote controller 100 transmits a first control signal including information concerning a first sensing level to the image processing terminal 102.

Subsequently, the image processing terminal 102 may display a second screen showing a recommendation VOD as shown in (B) in FIG. 12 in the event that the remote controller 100 transmits a second control signal including information concerning a second sensing level to the image processing terminal 102.

That is, the image processing terminal 102 may change the screen or the application according to the sensing level of the remote controller 100.

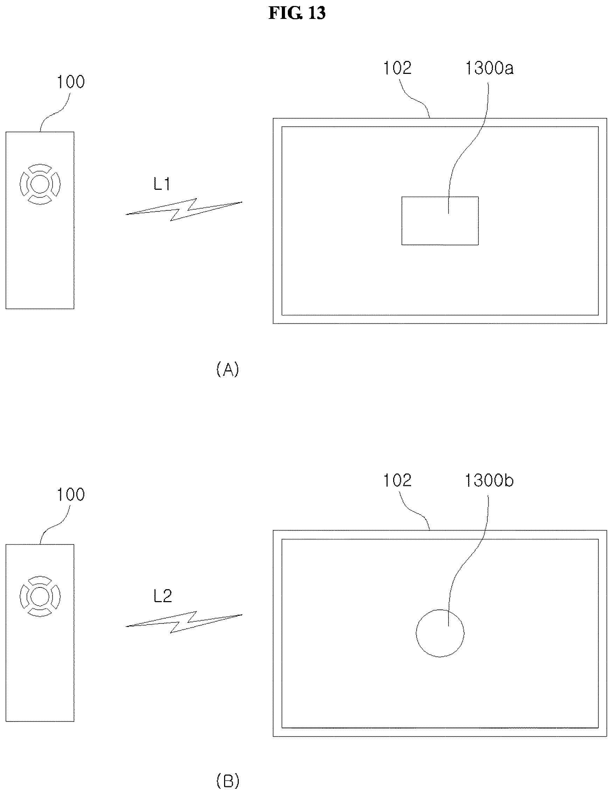

FIG. 13 is a view illustrating an operation of the media system according to still another embodiment of the invention.

An entity is not displayed on the image processing terminal 102 if the sensing level of the remote controller 100 corresponds to the normal input, but an entity notifying of a force input 1300 may be displayed on the image processing terminal 102 if the sensing level of the remote controller 100 corresponds to the force input. Accordingly, the user may confirm whether it is the normal input or the force input by looking at the image processing terminal 102 with no need to look at the remote controller 100.

In one embodiment, an entity 1300 in accordance with the force input may be differently displayed. For example, an entity notifying of a force input 1300a may be displayed as shown in (A) in FIG. 13 in the event that the force input corresponding to the second sensing level is applied to the remote controller 100, and an entity notifying of a force input 1300b may be displayed as shown in (B) in FIG. 13 in the event that a force input corresponding to a third sensing level is applied to the remote controller 100. Here, the force input showing entities 1300a and 1300b differ in view of a shape, a color or a size, etc.

Hereinafter, a structure and a function of the remote controller 100 will be described in detail.

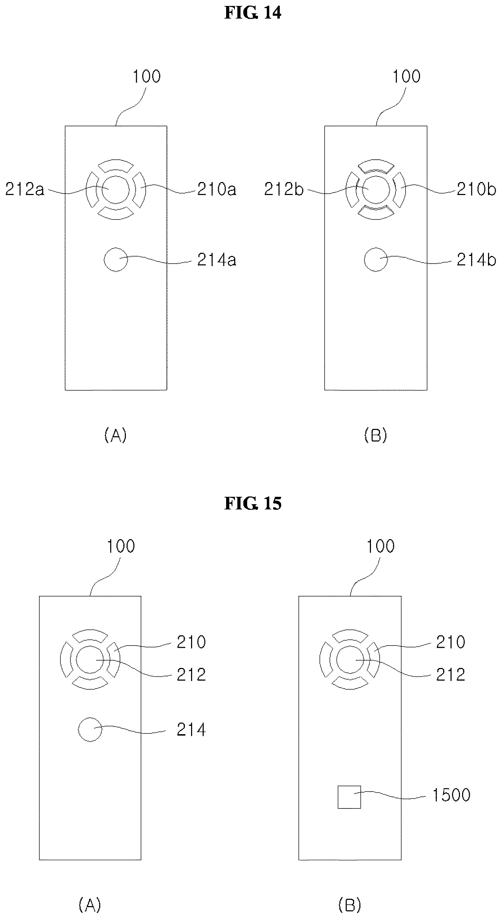

FIG. 14 is a view illustrating schematically a structure of the remote controller according to a first embodiment of the invention.

Keys 210a, 212a and 214a of the remote controller 100 may be implemented by software as shown in (A) in FIG. 14. Keys 210b, 212b and 212c may be implemented by hardware including dome key type as shown in (B) in FIG. 14.

In one embodiment, in the event that the keys 210b, 212b and 212c of the remote controller 100 are implemented with the dome key type, a sensor for sensing the force input may be formed on a direct upper part or a direct lower part of a button.

Further, In the event that the keys 210b, 212b and 212c are implemented in the dome key type, one click to the key may be determined as the normal input, and two clicks to the key may be determined as the force input.

FIG. 15 is a view illustrating schematically a structure of the remote controller according to a second embodiment of the invention.

If keys 210, 212 and 214 of the remote controller 100 are implemented by software, the arrangement and composition of the keys 210, 212 and 214 may be changed according to user's request or upon a software upgrade. For example, the keys 210, 212 and 214 are arranged as shown in (A) in FIG. 15 or new key 1500 may be included instead of the key 214 as shown in (B) in FIG. 15.

In this case, the normal input and the force input may be set to the new key 1500, and an operation of the image processing terminal 102 may differ according to the normal input or the force input applied to the new key 1500.

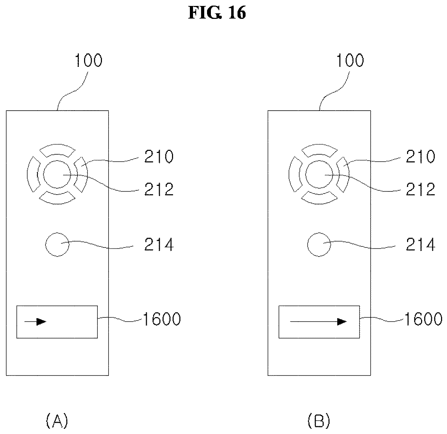

FIG. 16 is a view illustrating schematically a structure of the remote controller according to a third embodiment of the invention.

Referring to (A) and (B) in FIG. 16, the remote controller 100 may further include a touch area 1600 as well as the keys 210, 212 and 214. Here, the normal input and the force input may be determined depending on a touch length on the touch area 1600 by the touch means. For example, a touch may be determined as the normal input in the event that the touch area 1600 is touched by the touch means with short length as shown in (A) in FIG. 16. A touch may be determined as the force input in the event that the touch area 1600 is touched by the touch means with long length as shown in (B) in FIG. 16.

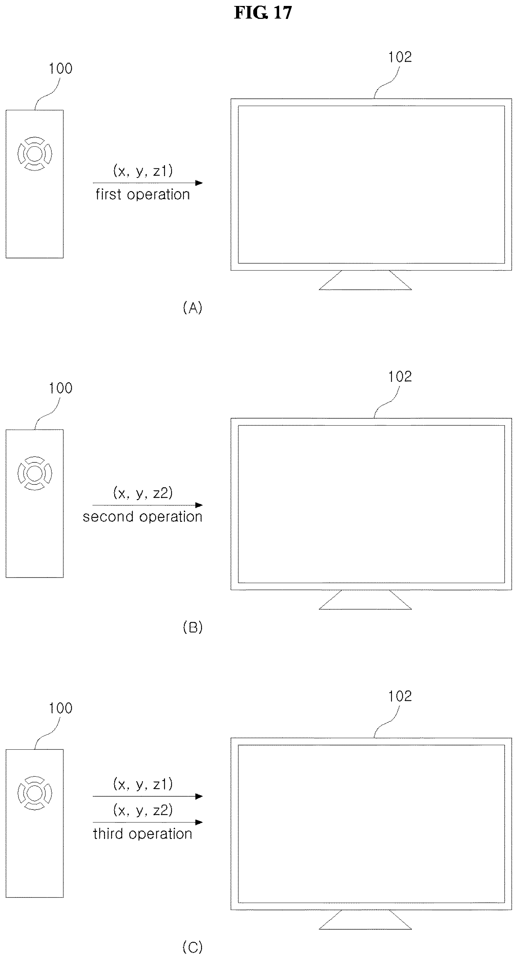

FIG. 17 is a view illustrating an operation of the media system according to another embodiment of the invention.

In (A) in FIG. 17, the remote controller 100 may transmit a first control signal including a coordinate(x, y, z1) to the image processing terminal 102 in the event that a sensing level of a specific key in the remote controller 100 corresponds to a first sensing level (e.g., normal input). Here, the image processing terminal 102 may perform a first operation.

In (B) in FIG. 17, the remote controller 100 may transmit a second control signal including a coordinate (x, y, z2) to the image processing terminal 102 in the event that a sensing level of the specific key in the remote controller 100 corresponds to a second sensing level (e.g., force input). Here, the image processing terminal 102 may perform a second operation. In this case, the operation in (B) in FIG. 17 is performed while the operation in (A) in FIG. 17 is not being performed.

In (C) in FIG. 17, the operation in (B) in FIG. 17 may be performed before predetermined time is elapsed after the operation in (A) in FIG. 17 is performed. In this case, the image processing terminal 102 may perform a third operation which is not the second operation. Particularly, the image processing terminal 102 may perform the third operation in the event that the remote controller 100 transmits the second control signal corresponding to the second sensing level (e.g., force input) before the predetermined time is elapsed after it transmits the first control signal corresponding to the first sensing level (e.g., normal input).

In brief, although the same force input is applied to the same key, the operation of the image processing terminal 102 may differ according to an operation between the remote controller 100 and the image processing terminal 102.

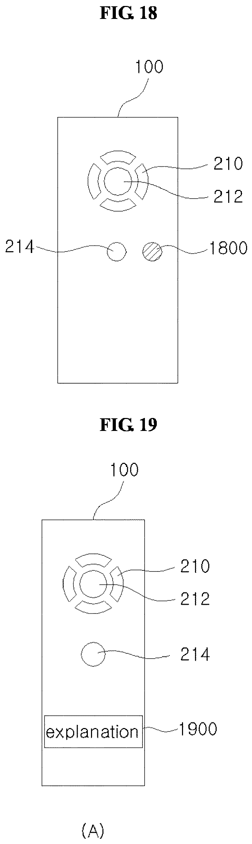

FIG. 18 is a view illustrating schematically a structure of the remote controller according to a fourth embodiment of the invention.

In FIG. 18, the remote controller 100 may include new force input key 1800 as well as the keys 210, 212 and 214.

The keys 210, 212 and 214 may operate as keys for the normal input or operate as keys for the force input only when the force input key 1800 is selected. For example, selection of the determination key 212 may be determined as the normal input, but the selection of the determination key 212 may be determined as the force input if the determination key 212 and the force input key 1800 are simultaneously selected or sequentially selected.

On the other hand, the keys of the remote controller 100 are expressed in three dimensional coordinate, but may be expressed in four dimensional coordinate. For example, if new key is added to the remote controller 100 or specific key is selected with higher pressure, the remote controller 100 transmits information concerning a coordinate (x, y, z, t) to the image processing terminal 102 and the image processing terminal 102 performs an operation corresponding to the coordinate (x, y, z) with a shaking effect on the screen.

FIG. 19 is a view illustrating schematically a structure of the remote controller according to a fifth embodiment of the invention.

In FIG. 19, the remote controller 100 may further include an explanation area 1900 as well as the keys 210, 212 and 214.

As it is difficult for the user to know what function or operation will be performed in response to the force input, an explanation about a function or an operation to be performed may be shown in the explanation area 1900 when the force input is applied. Accordingly, the user may use the remote controller with knowledge that what function or operation will be performed in response to the force input.

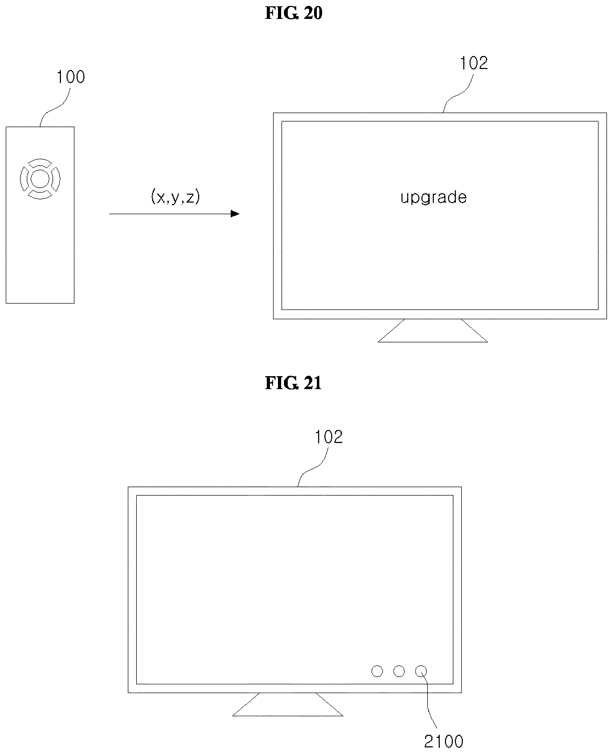

FIG. 20 is a view illustrating an upgrade operation of the media system according to one embodiment of the invention.

In FIG. 20, when a media system including the remote controller and the image processing terminal is upgraded, a software of the image processing terminal 102 may be upgraded whereas a software of the remote controller is not upgraded.

In this case, the remote controller 100 may transmit a control signal including the coordinate (x, y, z) to the image processing terminal 102. The image processing terminal 102 may perform an operation corresponding to the coordinate (x, y, z) in accordance with an installed software. Accordingly, the image processing terminal 102 may perform a different operation though the remote controller 100 transmits the control signal including the same coordinate (x, y, z) to the image processing terminal 102.

That is, since the remote controller 100 need not to be upgraded, the remote controller 100 may be achieved with a simple structure and specifications.

FIG. 21 is a view illustrating an image processing terminal according to one embodiment of the invention.

The user often loses the remote controller 100 while using the remote controller 100. The image processing terminal 102 may include at least one key 2100 capable of applying the force input so that the force input can be applied via the key 2100 placed on the image processing terminal 102. Since an operation of the key 2100 is the same as the aforementioned embodiments, any further description concerning the operation will be omitted.

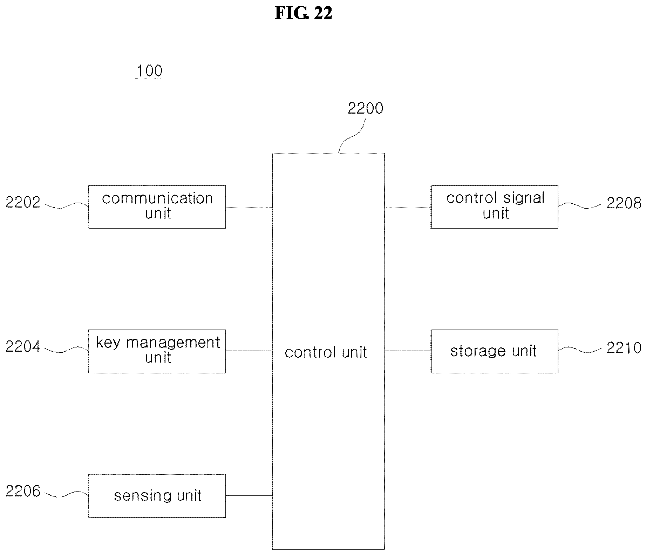

FIG. 22 is a block diagram illustrating a remote controller according to one embodiment of the invention.

In FIG. 22, the remote controller 100 of the present embodiment includes a control unit 2200, a communication unit 2202, a key management unit 2204, a sensing unit 2206, a control signal unit 2208 and a storage unit 2210.

The communication unit 2202 is a connection path to the image processing terminal 102 and includes a wireless or a wired communication method.

The key management unit 2204 manages the navigation key, the determination key, the function key, etc. The composition or arrangement of the keys may be set in various ways according to the user's request when the keys are implemented by software.

The sensing unit 2206 senses the normal input and the force input.

The control signal unit 2208 generates the control signal including coordinate information in accordance with the input of the key by the user, and transmits the generated control signal to the image processing terminal 102.

The storage unit 2210 stores various data such as the control signal and a program, etc.

The control unit 2200 controls operations of components of the image processing terminal 102.

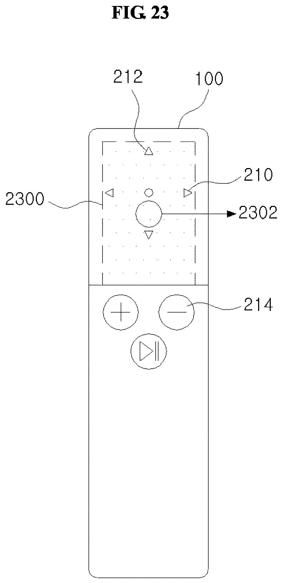

FIG. 23 is a view illustrating a structure of the remote controller according to one embodiment of the invention.

In FIG. 23, for example, a first sensing unit for sensing the touch by the means may be formed with a capacitive method in an area 2300, and a second sensing unit for sensing the force input may be formed on an area 2302. Here, the first sensing unit senses the coordinate (x, y) of the key.

The second sensing unit for sensing the force input is formed in an area smaller than an area of the first sensing unit. Of course, the second sensing unit in the area 2302 senses the force input when the user applies the force input in an area except the area 2032.

Here, a part of the navigation key 210, the determination key 212 and the function key 214 may locate in the area 2302, or every key 210, 212 and 214 may locate outside of the area 2302.

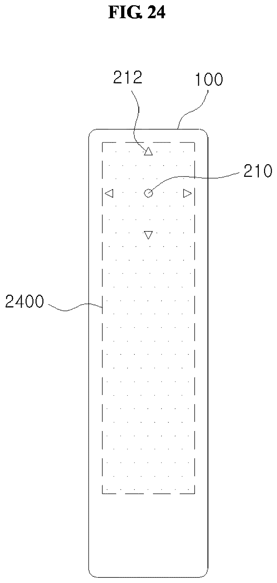

FIG. 24 is a view illustrating a structure of the remote controller according to another embodiment of the invention.

In FIG. 24, a first sensing unit for sensing the touch and a second sensing unit for sensing the force input may be formed on an area 2400. The first or second sensing unit may sense the touch by the touch means in a capacitive method.

That is, the second sensing unit of the embodiment shown in FIG. 24 may be formed in an area larger than the area of the second sensing unit in FIG. 23. Thus, the remote controller 100 may sense the force input with more excellent sensitivity. The price of the remote controller 100 in FIG. 23 may be lower than that of the remote controller in FIG. 24.

Components in the embodiments described above can be easily understood from the perspective of processes. That is, each component can also be understood as an individual process. Likewise, processes in the embodiments described above can be easily understood from the perspective of components.

Also, the technical features described above can be implemented in the form of program instructions that may be performed using various computer means and can be recorded in a computer-readable medium. Such a computer-readable medium can include program instructions, data files, data structures, etc., alone or in combination. The program instructions recorded on the medium can be designed and configured specifically for the invention or can be a type of medium known to and used by the skilled person in the field of computer software. Examples of a computer-readable medium may include magnetic media such as hard disks, floppy disks, magnetic tapes, etc., optical media such as CD-ROM's, DVD's, etc., magneto-optical media such as floptical disks, etc., and hardware devices such as ROM, RAM, flash memory, etc. Examples of the program of instructions may include not only machine language codes produced by a compiler but also high-level language codes that can be executed by a computer through the use of an interpreter, etc. The hardware mentioned above can be made to operate as one or more software modules that perform the actions of the embodiments of the invention, and vice versa.

The embodiments of the invention described above are disclosed only for illustrative purposes. A person having ordinary skill in the art would be able to make various modifications, alterations, and additions without departing from the spirit and scope of the invention, but it is to be appreciated that such modifications, alterations, and additions are encompassed by the scope of claims set forth below.

**[Description of reference numbers]**

| | | | |
|---|---|---|---|
| 100 : | remote controller | 102 : | image processing unit |
| 200 : | body | 210 : | navigation key |
| 212 : | function key | 214 : | determination key |
| 400 : | touch means | 600 : | entity |
| 900 : | selected entity | 1300 : | entity notifying of force |
| input | | | |
| 1600 : | touch area | 1900 : | explanation area |

## Claims

1. A remote controller, comprising:
at least one of a navigation key, a determination key or a function key;
a first sensing unit configured to sense a coordinate of the key;
a second sensing unit configured to sense one or more of pressure and an area applied to the key by a means for selecting the key; and
a control signal unit,
wherein one or more sensing levels are set to the key,
and wherein the sensing level is determined according to at least one of the pressure or the area, an area for the second sensing unit is less than an area for the first sensing unit, the control signal unit outputs a control signal including a control information concerning the determined sensing level, the control information includes the coordinate of the selected key and information concerning the pressure or the area applied when the key is selected, and plural sensing levels from the same key are matched with different functions or screens.

2. The remote controller of claim 1, wherein the key is implemented by software, plural sensing levels are set to each of the navigation key, the determination key and the function key, and the sensing levels are matched with different functions or screens of an image processing terminal connected to the remote controller.

3. The remote controller of claim 1, wherein the coordinate of the selected key and the information concerning the pressure or the area applied when the key is selected are expressed in a three-dimensional coordinate (x, y, z), and a function or a screen of an image processing terminal connected to the remote controller differs depending on a coordinate (z) of the same key.

4. The remote controller of claim 3, wherein the three-dimensional coordinate (x, y, z) is determined when the key is pressed or touched during a predetermined period of time or more.

5. The remote controller of claim 1, wherein the sensing levels are matched with different screens of an image processing terminal connected to the remote controller,
and wherein the different screens include different user interfaces.

6. The remote controller of claim 1, further comprising:
an explanation area configured to show an explanation about the sensing level of the key and a function related to the sensing level.

7. The remote controller of claim 1, wherein the sensing levels include a first sensing level corresponding to a normal input by the means touching the key and a second sensing level corresponding to a force input by the means touching the key with higher pressure or a wider area than the first sensing level,
wherein an image processing terminal connected to the remote controller performs a general function of the remote controller shown externally according to the first sensing level and performs a function different from the general function according to the second sensing level, and
wherein, when the means touches the key with long length, the image processing terminal performs a function which is different from the function corresponding to the first sensing level or the second sensing level.

8. The remote controller of claim 7, wherein one of the sensing levels corresponding to the force input applied to the determination key or the function key, not the navigation key, corresponds to an up key and another sensing level corresponds to a down key.

9. The remote controller of claim 7, wherein the navigation key operates as the function key or the determination key when the force input is applied to the navigation key, the function key operates as the navigation key or the determination key when the force input is applied to the function key, or the determination key operates as the navigation key or the function key when the force input is applied to the determination key.

10. The remote controller of claim 1, wherein, when a media system including the remote controller and the image processing terminal connected to the remote controller is upgraded, software of an image processing terminal is upgraded and software of the remote controller is not upgraded,
and wherein, regardless of the upgrade, the remote controller expresses the coordinate of the selected key and the information concerning the pressure or the area applied when the key is selected in three or more dimensional coordinate, and transmits the three or more dimensional coordinate to the image processing terminal.

11. The remote controller of claim 1, wherein, when a sensing level corresponding to the touch on the remote controller by the means is not matched with a predetermined sensing level and is located between predetermined sensing levels, the sensing level is determined to be either a higher sensing level or a lower sensing level than the sensing level.

12. The remote controller of claim 1, wherein an entity notifying of a force input is displayed on a screen of an image processing terminal connected to the remote controller when the force input is applied to a specific key of the remote controller, the force input being applied with higher pressure or a wider area than a normal input
and wherein the image processing terminal does not display the entity notifying of the force input when the normal input is applied to the specific key.

13. A remote controller comprising:
at least one of a navigation key, a determination key or a function key;
a sensing unit configured to sense a selection of the key;
a control signal unit,
wherein an input for selecting the key includes a normal input and a force input with higher pressure or a wider area than the normal input,
and wherein the normal input is related to a first function or a first screen corresponding to a general function of the key shown externally, the force input is related to a second function or a second screen not shown externally, and the second function and the second screen are different from the first function and the first screen, respectively.

14. The remote controller of claim 13, wherein the force input is expressed in three or more dimensional coordinate including a coordinate of the selected key and an information concerning pressure or an area applied when the key is selected, and the control signal unit transmits a control signal including the three or more dimensional coordinate to an image processing terminal connected to the remote controller.

15. A remote controller comprising:
a navigation key;
a function key;
a determination key; and
a sensing unit configured to sense a selection of the navigation key, the function key or the determination key,
wherein a normal input and a force input are set to at least one of the navigation key, the function key or the determination key, the force input being applied to a corresponding key with higher pressure or a wider area than the normal input
and wherein the navigation key operates as the function key or the determination key when the force input is applied to the navigation key, the function key operates as the navigation key or the determination key when the force input is applied to the function key, or the determination key operates as the navigation key or the function key when the force input is applied to the determination key.

16. The remote controller of claim 15, wherein one of the sensing levels corresponding to the force input applied to the determination key or the function key, not the navigation key, corresponds to an up key and another sensing level corresponds to a down key.

17. The remote controller of claim 15, wherein the normal input is related to a first function or a first screen corresponding to a general function of the key shown externally, the force input is related to a second function or a second screen not shown externally, and the second function and the second screen are different from the first function and the first screen, respectively.

18. A remote controller comprising:
at least one of a navigation key, a determination key or a function key;
a sensing unit configured to sense a selection of the key; and
a control signal unit,
wherein one or more sensing levels are set to the key,
and wherein the sensing level is determined according to one or more of pressure and an area applied to the key by a means selecting the key, the control signal unit outputs a control signal including a control information concerning the determined sensing level, the control information includes a coordinate of the selected key and an information concerning the pressure or the area determined when the key is selected, sensing levels from the same key are matched with different function or screen of an image processing terminal connected to the remote controller, and a function or a screen of the image processing terminal varies according to a software of the image processing terminal in the same sensing level from the same key of the remote controller.

19. A method for operating a remote controller, the method comprising:
sensing a selection of a key in the remote controller with a normal input;
outputting a first control signal corresponding to the normal input;
sensing a force input being applied to the key with higher pressure or a wider area than the normal input; and
outputting a second control signal corresponding to the force input,
wherein the normal input and the force input from the same key are matched with a different function or screen, and an area of a sensing unit for sensing the force input of the remote controller is less than an area of a sensing unit for sensing a coordinate of the key of the remote controller.

20. The method of claim 19, wherein the normal input is related to a first function or a first screen corresponding to a general function of the key shown externally, the force input is related to a second function or a second screen not shown externally, and the second function and the second screen are different from the first function and the first screen, respectively.
